# FASCICULE DE BREVET EUROPEEN

(11) **EP 2 466 029 B1**
(45) Date de publication et mention de la délivrance du brevet: **11.02.2015**
(21) Numéro de dépôt: 11194693.5
(22) Date de dépôt: 20.12.2011
(51) Int. Cl.: E04B 5/48, F24D 3/14

(54) **Plaque à plots thermiquement isolante**
Wärmeisolierende Kontaktplatte
Thermally insulating plate with studs

(30) Priorité: 20.12.2010 FR 1004974
(43) Date de publication de la demande: 20.06.2012
(73) Titulaire: Knauf Industries Gestion, 68600 Wolfgantzen (FR)
(72) Inventeur: Pelletier, Raphaël, 68420 Colmar (FR); Sutter, Patrick, 68260 Kingersheim (FR); Rives, Michel, 38140 Apprieu (FR)
(74) Mandataire: Bugnion Genève

(56) Documents cités:
- EP-A1- 0 000 484
- DE-A1- 2 725 950
- DE-U1- 9 306 684
- US-A- 4 640 067

## Description

La présente invention concerne une plaque à plots thermiquement isolante destinée à la réalisation de dalles de plancher chauffant en béton ou ciment.

Il existe des plaques en matériau alvéolaire léger (tel que du polystyrène expansé - PSE) comprenant une face supérieure pourvue de plots délimitant entre eux des passages pour des conduites hydrauliques de chauffage et une face inférieure formant une semelle de support.

Les plots assurent, par coincement, le positionnement et la retenue desdites conduites sur la plaque.

Ces plaques sont destinées à former une embase pour la coulée ultérieure d'une chape de béton en vue de réaliser une dalle dans laquelle les plaques se trouvent ensuite noyées avec le circuit hydraulique.

Cependant, ces plaques ont une faible résistance mécanique en raison, d'une part, de la nature du matériau constitutif et, d'autre part, du profil des plots saillants qui sont érigés de façon sensiblement verticale et qui sont fragilisés par la présence des gorges transversales.

Par suite, avant la coulée du béton, le stockage et la manipulation des plaques ainsi que la circulation du personnel sur le chantier pour le montage du circuit hydraulique sont autant de facteurs de rupture des plots.

Or cette rupture, par choc ou écrasement, génère des débris de matière piégés dans la chape lors de sa coulée et qui sont susceptibles de créer, après la prise du béton, à la fois des défauts de surface préjudiciables à l'esthétique et des défauts de structure réduisant la solidité de la dalle.

Certaines plaques sont ainsi revêtues d'un film plastique de renfort dont la pose est laborieuse et onéreuse du fait de la complexité du profil des plots.

En outre, le transport et le stockage de ces plaques posent des problèmes d'encombrement car sa face inférieure ne coopère pas avec les plots en saillie de sa face supérieure pour permettre un empilage compact.

Dans ces conditions, il est nécessaire de retourner les plaques et de les disposer tête-bêche ce qui occasionne des manipulations laborieuses compte tenu de la taille de ces plaques.

Enfin, le profil et la distribution des gorges sur la face supérieure n'autorisent pas le placement de circuits hydrauliques complexes qui sont pourtant nécessaires pour l'obtention d'un apport calorifique optimal dans la dalle.

Une plaque à plots thermiquement isolante est décrite dans le document EP-A-0 000 484.

La présente invention a pour objectif de résoudre de manière satisfaisante les problèmes techniques posés par les plaques de l'art antérieur.

Ce but est atteint, selon, l'invention, au moyen d'une plaque thermiquement isolante caractérisée en ce que lesdits plots sont pourvus de gorges transversales dans lesquelles sont retenues lesdites conduites et présentent des faces latérales sans contre-dépouille avec une base élargie.

Selon une autre caractéristique avantageuse, la face inférieure comporte des cavités de profil complémentaire à celui desdits plots.

Selon encore une autre caractéristique avantageuse, chaque plot est pourvu d'au moins deux gorges perpendiculaires débouchant diamétralement de part et d'autre dudit plot et s'étendant de façon perpendiculaire entre elles.

Selon une autre caractéristique, lesdits plots sont disposés selon des rangées parallèles et inclinées par rapport aux bords de ladite plaque.

De préférence, lesdites rangées sont équidistantes.

Selon une première variante de l'invention, la section verticale desdits plots a un profil en cloche.

Selon une autre variante, la section verticale desdits plots est trapézoïdale.

De préférence, lesdites gorges présentent une portion basse à flancs droits et une portion haute à flancs cylindriques.

Selon encore une autre caractéristique, la face supérieure comporte des bossages formant entretoises pour les conduites hydrauliques.

Avantageusement, le fond desdites gorges est lui-même pourvu d'un bossage.

Selon une autre variante, lesdits bossages sont réalisés sous forme de croisillons.

Ces bossages sont alignés entre les rangées de plots.

Selon une caractéristique spécifique, lesdites cavités sont ménagées dans une surépaisseur réalisée sur la face inférieure de la plaque.

Selon encore une autre variante, lesdits plots sont jointifs.

Dans cette variante, lesdits plots sont, de préférence, constitués de deux quartiers de section en cloche placés en vis-à-vis et d'un pavé central.

Selon un procédé particulier de fabrication de la plaque de l'invention, lesdits plots sont rapportés sur la face supérieure et non moulés d'une seule pièce avec l'âme centrale.

La plaque est réalisée avec un matériau alvéolaire thermiquement isolant tel que du polystyrène expansé (PSE) ou du polypropylène expansé (PP).

La plaque isolante de l'invention possède une résistance mécanique renforcée et offre des possibilités plus variées de montage et de calorifugeage des circuits hydrauliques de chauffage.

Les différentes variantes de plots sont toutes ergonomiques et limitent les risques de rupture par butée ou écrasement. En outre, le stockage des plaques de l'invention est aisé et compact et, grâce aux cavités inférieures, permet un empilage stable et peu encombrant.

Ces cavités procurent, en outre, un gain de matière sans dégrader les propriétés mécaniques de la plaque ainsi qu'une isolation thermique renforcée sous la dalle.

L'invention sera mieux comprise à la lecture de la description qui va suivre, en se référant aux dessins annexés sur lesquels .
La figure 1 représente une vue en perspective d'un premier mode de réalisation de la plaque de l'invention,
La figure 2 représente une vue de détail en perspective d'un plot selon le mode de réalisation de la figure 1,
La figure 3 représente une vue en coupe latérale partielle d'un empilage de plaques selon le mode de réalisation de la figure 1,
La figure 4 représente une vue en perspective d'un second mode de réalisation de la plaque de l'invention,
La figure 5 représente une vue de détail en perspective d'un plot selon le mode de réalisation de la figure 4,
La figure 6 représente une vue de détail en perspective d'un troisième mode de réalisation de plot.

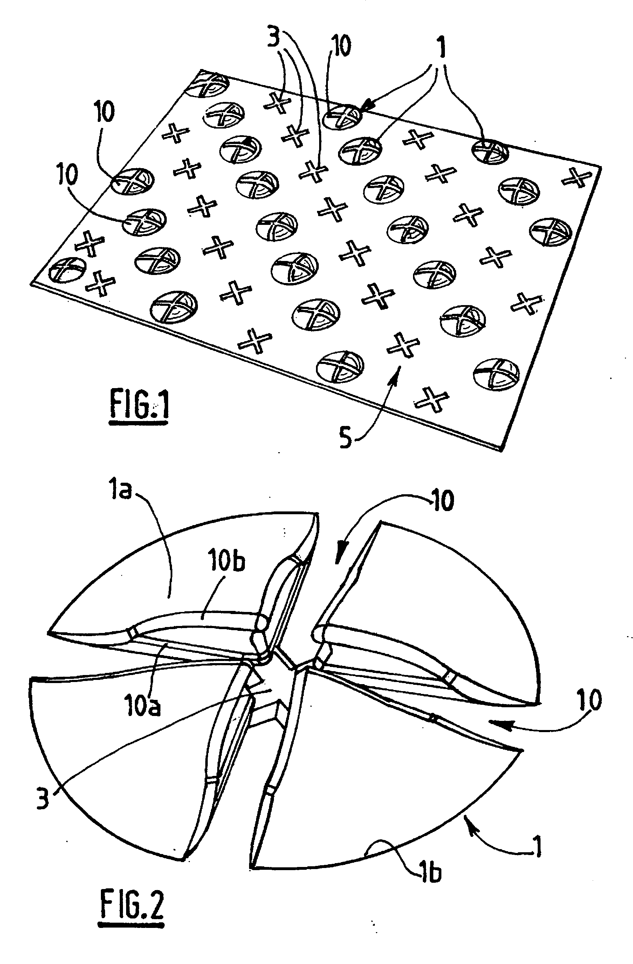

La plaque représentée sur la figure 1 est destinée à la réalisation d'une dalle de plancher chauffant dans un immeuble d'habitation ou un local d'activité.

Cette plaque thermiquement isolante est fabriquée, par exemple, par moulage d'une matière alvéolaire telle que du polystyrène expansé (PSE) ou du polypropylène expansé (PP) avec ou sans les plots qui peuvent aussi être rapportés par la suite par collage ou ancrage.

Le cas échéant, au moins la face supérieure S de la plaque (y compris les plots) est soumise à une opération dite de « surfusion » consistant à fondre superficiellement la matière alvéolaire afin de la rendre localement plus rigide.

La première étape du chantier consiste à placer la plaque horizontalement sur le sol puis à monter le circuit hydraulique de chauffage avant de couler une chape de béton destinée à recouvrir et à enrober le circuit et la plaque.

L'opération de montage du circuit est effectuée en fixant les divers tronçons de conduites de chauffage et leurs raccords sur la plaque par engagement dans des gorges 10 ménagées au travers de plots 1 qui sont répartis uniformément sur la face supérieure S de ladite plaque isolante.

Lors de cette opération, le personnel est amené à marcher sur la plaque et les risques de butée sur les plots 1 en saillie sont donc importants.

Compte tenu de la relative fragilité du matériau, il est donc nécessaire d'éviter la rupture des plots 1 en adaptant leur structure de telle sorte qu'elle puisse favoriser un glissement des pieds du personnel sur leur face latérale plutôt qu'un choc brutal sur leur paroi.

C'est ainsi que selon l'invention, il est prévu que les plots 1 présentent des faces latérales 1a sans contre-dépouille et une base élargie 1b, comme dans le mode de réalisation représenté sur la figure 2 où la section desdits plots a un profil en cloche.

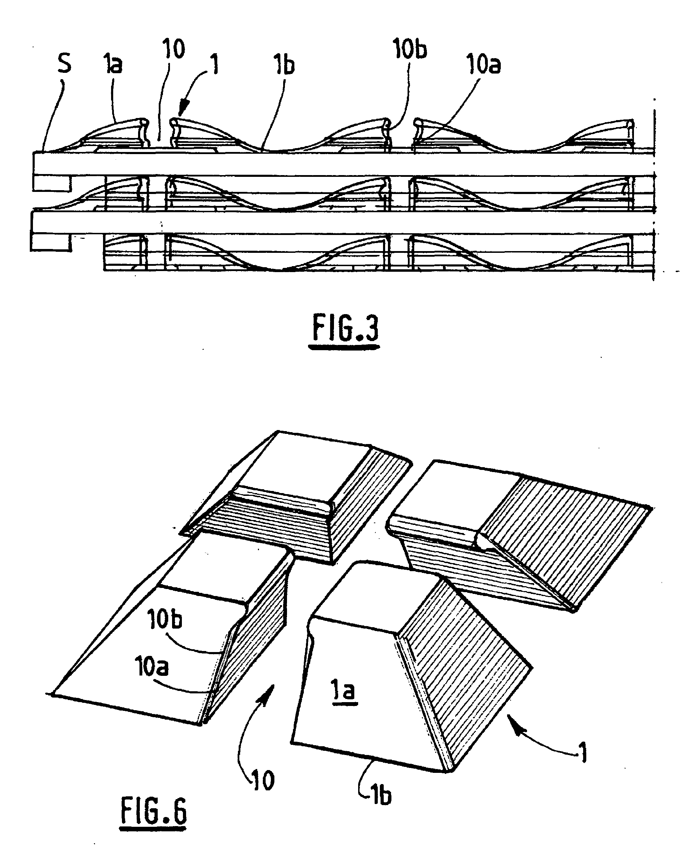

Le sommet des plots offre ainsi une surface légèrement curviligne (figure 2) ou quasi plane (figure 6) qui se prolonge sans discontinuité sur les faces latérales 1a jusqu'à la base 1b en facilitant le passage et le glissement des pieds sans heurt et sans risque de choc brutal.

Dans la variante de la figure 2, la section des plots a un profil en cloche tandis que, dans la variante de la figure 6, la section des plots est trapézoïdale.

Les plots 1 sont disposés selon des rangées parallèles et inclinées par rapport aux bords de la plaque en étant séparées entre elles d'un pas identique.

Chaque plot 1 est pourvu d'au moins deux gorges perpendiculaires 10 débouchant diamétralement de part et d'autre du plot et s'étendant de façon perpendiculaire entre elles, comme représenté sur la figure 2.

De préférence, les gorges 10 présentent une portion basse 10a à flancs droits et une portion haute 10b à flancs cylindriques (figures 2,3 et 6).

La portion 10b est destinée à recevoir, par encliquetage ou déformation élastique (en fonction de la nature du matériau des plots), les conduites du circuit de chauffage (non représentées) qui sont donc ainsi retenues sur la plaque en étant positionnées à distance du fond de la gorge et calorifugées, au moins partiellement.

La face supérieure S de la plaque comporte également des bossages 3 formant entretoises pour le circuit hydraulique en ménageant un espace libre sous les conduites.
Les conduites se trouvent ainsi légèrement écartées de la face supérieure de la plaque.
Cet espace libre a vocation à être ensuite comblé par le béton lors de la coulée.

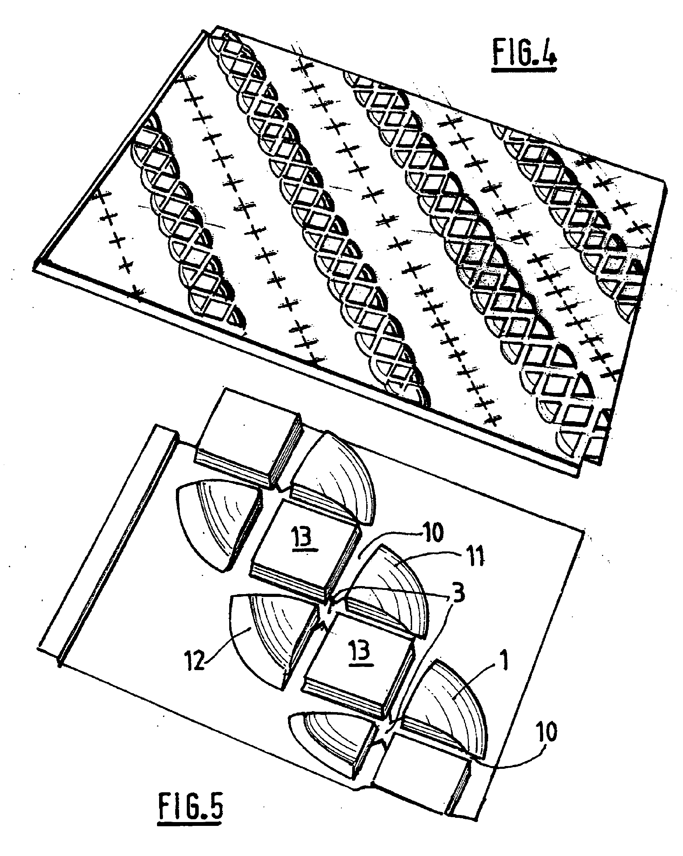

Avantageusement, le fond des gorges 10 est lui-même pourvu d'un bossage 3, comme représenté sur les figures 2 et 5 où ces bossages sont réalisés ici sous forme de croisillons de façon à améliorer le calage des tuyaux de conduite.

Les bossages 3 sont alignés entre les rangées de plots, comme illustré par les figures 1 et 4.

La face inférieure I de la plaque de l'invention forme une semelle de support sur le sol et comporte des cavités de profil complémentaire à celui des plots 1 et, éventuellement, des empreintes supplémentaires pour le logement des bossages 3.
Ainsi, lors de l'empilage d'au moins deux plaques identiques, les plots 1 de la première plaque viennent se loger dans les cavités ménagées sur la face inférieure de l'autre plaque située au-dessus, comme représenté sur la figure 3 ce qui assure le calage des plaques et offre un encombrement minimal.

De préférence, les cavités sont ménagées dans une surépaisseur réalisée sur la face inférieure I de la plaque.

Selon une variante non représentée, les cavités comportent, en outre, des nervures en croix dont le profil est adapté à celui des gorges perpendiculaires des plots de façon à s'engager dans ces dernières lors d'un empilage de plaques identiques.

Dans la variante de la figure 4, les plots 1 sont jointifs.

Dans cette variante, les plots sont ici constitués de deux quartiers 11, 12 de section verticale en cloche, placés en vis-à-vis, et d'un pavé central 13.
Les gorges 10 sont délimitées entre les quartiers 11, 12 et le pavé 13.

## Revendications

1. Plaque à plots thermiquement isolante pour la réalisation de dalles de plancher chauffant comprenant une face supérieure (S) pourvue de plots (1) pour la fixation de conduites hydrauliques et une face inférieure (I) formant semelle de support, **caractérisée en ce que** lesdits plots présentent, d'une part, un sommet avec une surface légèrement curviligne qui se prolonge sans discontinuité, via des faces latérales (1a) sans contre-dépouille, jusqu'à une base élargie (1b) pour faciliter le passage et le glissement des pieds sans risque de choc et, d'autre part, des gorges transversales (10) pour retenir lesdites conduites hydrauliques et **en ce que** la face inférieure (I) comporte des cavités de profil complémentaire à celui des plots (1) afin de permettre un empilage stable et compact de plusieurs plaques.

2. Plaque à plots selon la revendication 1 **caractérisée en ce que** chaque plot (1) est pourvu d'au moins deux gorges perpendiculaires débouchant diamétralement de part et d'autre dudit plot et s'étendant de façon perpendiculaire entre elles.

3. Plaque à plots selon l'une des revendications précédentes **caractérisée en ce que** lesdits plots sont disposés selon des rangées parallèles et inclinées par rapport aux bords de la dite plaque.

4. Plaque à plots selon la revendication 3 **caractérisée en ce que** lesdites rangées sont équidistantes.

5. Plaque à plots selon l'une des revendications précédentes **caractérisée en ce que** lesdites gorges (10) présentent une portion basse (10a) à flancs droits et une portion haute (10b) à flancs cylindriques.

6. Plaque à plots selon l'une des revendications précédentes **caractérisée en ce que** la face supérieure (S) comporte des bossages (3) formant entretoises pour les conduites hydrauliques.

7. Plaque à plots selon la revendication 6 **caractérisée en ce que** le fond desdites gorges (10) est lui-même pourvu d'un bossage (3).

8. Plaque à plots selon la revendication 6 ou 7 **caractérisée en ce que** lesdits bossages (3) sont réalisés sous forme de croisillons.

9. Plaque à plots selon les revendications 3 ou 4 et 6 **caractérisée en ce que** lesdits bossages sont alignés entre les rangées de plots.

10. Plaque à plots selon l'une des revendications précédentes **caractérisée en ce que** lesdites cavités sont ménagées dans une surépaisseur disposée sur la face inférieure (I) de la plaque.

11. Plaque à plots selon l'une des revendications précédentes **caractérisée en ce que** lesdits plots (1) sont jointifs.

12. Plaque à plots selon la revendication 11 **caractérisée en ce que** lesdits plots sont constitués de deux quartiers (11, 12) de section en cloche placés en vis à vis et d'un pavé central (13).

13. Plaque à plots selon l'une des revendications précédentes **caractérisée en ce que** lesdits plots sont rapportés sur la face supérieure (S).

14. Plaque à plots selon l'une des revendications précédentes **caractérisée en ce qu'**elle est réalisée avec un matériau alvéolaire.

15. Plaque à plots selon la revendication 14 **caractérisée en ce qu'**au moins la face supérieure (S) de la plaque en matériau alvéolaire, y compris les plots, a subi un traitement de surfusion consistant à fondre superficiellement la matière alvéolaire afin de la rendre localement plus rigide.

## Patentansprüche

1. Wärmeisolierende Platte mit Kontaktklötzen für die Herstellung von Platten einer Fußbodenheizung, die eine Oberseite (S) mit Kontaktklötzen (1) für die Befestigung von Hydraulikleitungen und eine stützsohlenbildende Unterseite (I) umfasst, **dadurch gekennzeichnet, dass** die Kontaktklötze (1) einerseits eine Spitze mit einer leicht gekrümmten Oberfläche aufweisen, die sich ohne Diskontinuität über Seitenflächen (1a) ohne Hinterschneidung bis zu einer erweiterten Basis (1 b) verlängert, um den Durchgang und das Gleiten der Füße ohne Stoßgefahr zu erleichtern, und andererseits transversale Rillen (10), um die Hydraulikleitungen zu halten und dass die Unterseite (I) Hohlräume mit einem Profil aufweist, das zu dem der Kontaktklötze (1) komplementär ist, um ein stabiles und kompaktes Stapeln mehrerer Platten zu ermöglichen.

2. Platte mit Kontaktklötzen nach Anspruch 1, **dadurch gekennzeichnet, dass** jeder Kontaktklotz (1) mit mindestens zwei lotrechten Rillen (10) ausgestattet ist, die diametral auf der einen und der anderen Seite des Kontaktklotzes ausmünden und sich lotrecht zueinander erstrecken.

3. Platte mit Kontaktklötzen nach einem der vorangehenden Ansprüche, **dadurch gekennzeichnet, dass** die Kontaktklötze (1) in parallelen und im Verhältnis zu den Rändern der Platte schrägen Reihen angeordnet sind.

4. Platte mit Kontaktklötzen nach Anspruch 3, **dadurch gekennzeichnet, dass** die Reihen gleich beabstandet sind.

5. Platte mit Kontaktklötzen nach einem der vorangehenden Ansprüche, **dadurch gekennzeichnet, dass** die Rillen (10) einen tiefen Abschnitt (10a) mit geraden Seiten und einen hohen Abschnitt (10b) mit zylindrischen Seiten aufweisen.

6. Platte mit Kontaktklötzen nach einem der vorangehenden Ansprüche, **dadurch gekennzeichnet, dass** die Oberseite (S) Höcker (3) aufweist, die für die Hydraulikleitungen Abstandhalter bilden.

7. Platte mit Kontaktklötzen nach Anspruch 6, **dadurch gekennzeichnet, dass** der Boden der Rillen (10) ebenfalls mit einem Höcker (3) ausgestattet ist.

8. Platte mit Kontaktklötzen nach Anspruch 6 oder 7, **dadurch gekennzeichnet, dass** die Höcker (3) kreuzförmig sind.

9. Platte mit Kontaktklötzen nach den Ansprüchen 3 oder 4 und 6, **dadurch gekennzeichnet, dass** die Höcker zwischen den Kontaktklotzreihen aufgereiht sind.

10. Platte mit Kontaktklötzen nach einem der vorangehenden Ansprüche, **dadurch gekennzeichnet, dass** die Hohlräume in einer Überdicke ausgebildet sind, die auf der Unterseite (I) der Platte angeordnet ist.

11. Platte mit Kontaktklötzen nach einem der vorangehenden Ansprüche, **dadurch gekennzeichnet, dass** die Kontaktklötze (1) fugendicht sind.

12. Platte mit Kontaktklötzen nach Anspruch 11, **dadurch gekennzeichnet, dass** die Kontaktklötze von zwei Vierteln (11, 12) mit glockenförmigem Querschnitt, die gegenüber platziert sind, und einem zentralen Klotz (13) gebildet werden.

13. Platte mit Kontaktklötzen nach einem der vorangehenden Ansprüche, **dadurch gekennzeichnet, dass** die Kontaktklötze auf der Oberseite (S) aufgesetzt sind.

14. Platte mit Kontaktklötzen nach einem der vorangehenden Ansprüche, **dadurch gekennzeichnet, dass** sie mit einem Wabenmaterial hergestellt ist.

15. Platte mit Kontaktklötzen nach Anspruch 14, **dadurch gekennzeichnet, dass** mindestens die Oberseite (S) der Platte aus Wabenmaterial inklusive der Kontaktklötze einer Unterkühlungsbehandlung unterzogen wurde, die darin besteht, das Wabenmaterial oberflächlich zu schmelzen, um es lokal zu versteifen.

## Claims

1. A plate with thermally insulating studs for producing heated flooring slabs comprising an upper face (S) provided with slots (1) for fastening hydraulic ducts and a lower face (I) forming a support sole plate, **characterized in that** said studs have an apex with a slightly curvilinear surface that extends without discontinuity, via lateral faces (1 a) with no undercut, up to a widened base (1 b) in order to facilitate the passage and sliding of feet without any risk of impact, on the one hand, and on the other hand, transverse grooves (10) for retaining said hydraulic ducts, and **in that** the lower face (I) includes cavities with a profile complementary to that of the studs (1) in order to allow the stable and compact stacking of several plates.

2. The plate with studs according to claim 1, **characterized in that** each stud (1) is provided with at least two perpendicular grooves emerging diametrically on either side of said stud and extending perpendicular to each other.

3. The plate with studs according to one of the preceding claims, **characterized in that** said studs are positioned in parallel rows and inclined relative to the edges of said plate.

4. The plate with studs according to claim 3, **characterized in that** said rows are equidistant.

5. The plate with studs according to one of the preceding claims, **characterized in that** said grooves (10) have a lower portion (10a) with straight flanks and an upper portion (10b) with cylindrical flanks.

6. The plate with studs according to one of the preceding claims, **characterized in that** the upper face (S) includes bosses (3) forming spacers between the hydraulic ducts.

7. The plate with studs according to claim 6, **characterized in that** the bottom of said grooves (10) is in turn provided with a boss (3).

8. The plate with studs according to claim 6 or 7, **characterized in that** said bosses (3) are made in the form of journal crosses.

9. The plate with studs according to claims 3 or 4 and 6, **characterized in that** said bosses are aligned between the rows of studs.

10. The plate with studs according to one of the preceding claims, **characterized in that** said cavities are arranged in an overthickness positioned in the lower face (I) of the plate.

11. The plate with studs according to one of the preceding claims, **characterized in that** said studs (1) are joined.

12. The plate with studs according to claim 11, **characterized in that** said studs are made up of two areas (11, 12) with a bell shaped section placed across from each other and a central paving stone (13).

13. The plate with studs according to one of the preceding claims, **characterized in that** said studs are attached on the upper face (S).

14. The plate with studs according to one of the preceding claims, **characterized in that** it is made from a cellular material.

15. The plate with studs according to claim 14, **characterized in that** at least the upper face (S) of the plate made from a cellular material, including the studs, has undergone a super cooling treatment consisting of superficially melting the cellular material, in order to make it locally more rigid.
